**Europäisches Patentamt**

**European Patent Office**

**Office européen des brevets**

(11) Veröffentlichungsnummer: **0 236 574**
**A2**

(12) **EUROPÄISCHE PATENTANMELDUNG**

(21) Anmeldenummer: **86117842.4**

(22) Anmeldetag: **20.12.86**

(51) Int. Cl.³: **F 16 L 5/02**

(30) Priorität: **09.01.86 DE 3600375**

(43) Veröffentlichungstag der Anmeldung:
**16.09.87 Patentblatt 87/38**

(84) Benannte Vertragsstaaten:
**CH DE ES FR GB IT LI NL SE**

(71) Anmelder: **Firma MCT Brattberg GmbH**
**Mühlendamm 66**
**D-2000 Hamburg 76(DE)**

(72) Erfinder: **Hartwig, Horst-Walter**
**Sonnenau 24**
**D-2000 Hamburg 76(DE)**

(74) Vertreter: **Gosch, Wolf-Dietrich et al,**
**Rechtsanwälte Dr. Armin Herdt Wolf-Dietrich Gosch Dr.**
**Manfred Georg Bullinger Ballindamm 13**
**D-2000 Hamburg 1(DE)**

(54) **Vorrichtung zur Abdichtung eines Ringraumes.**

(57) Vorrichtung zur Abdichtung eines Ringraumes an einer Abdichtstelle, die sich zwischen einer Innenwandung und einer Außenwandung erstreckt, bei der ein flexibler Schlauch (1) an der Abdichtstelle einer Längsachse des Ringraumes (2) im wesentlichen konzentrisch verläuft und sich dabei im wesentlichen kraftschlüssig an der Innenwandung (13) und der Außenwandung (15) abstützt. Der Schlauch (1) ist mit einem Druckmedium (53) gefüllt, das einen Anpressdruck des Schlauches (1) in Richtung auf die Innenund die Außenwandung (13, 15) ausbildet. Der Schlauch kann aus einem Endlosschlauch bestehen oder ringförmig ausgebildet sein.

Er ist mit mindestens einer das Druckmedium (53) aufnehmenden verschließbaren Einfüllöffnung versehen. Er kann ferner als ein Schlauchstück ausgebildet sein, dessen einander abgewandte Enden (3, 4) offen sind und mit einem die Enden abdichtenden Verbindungsstück (5) versehen sein.

EP 0 236 574 A2

## Vorrichtung zur Abdichtung eines Ringraumes

Die Erfindung betrifft eine Vorrichtung zur Abdichtung eines Ringraumes an einer Abdichtstelle, die sich zwischen einer Innenwandung und einer Außenwandung erstreckt. Derartige Ringräume entstehen beispielsweise, wenn ein Mediumrohr durch ein Schutzrohr (Mantelrohr) oder durch Decken, Sohlen oder Wände hindurchgeführt wird oder Rohrleitungen in bestimmte Bauabschnitte, Räume oder Maschinenanlagen eingeführt werden.

Aus konstruktiven Gründen müssen die Medienrohre dabei oft beweglich sein beziehungsweise später ein- oder ausgebaut werden. So entsteht zwischen Bauteil/Mantelrohr und Medienrohr ein Ringspalt, der zu einer Undichtigkeit des Bauteils führt. Damit dieser Spalt kontrolliert und nachprüfbar abgedichtet, beziehungsweise Rohre mit großem Durchmesser auf Zentrierkeilen oder Gleitkufen lagerichtig eingebaut werden können, wird der Ringspalt zu einem definierten Ringraum erweitert.

Bisher wurden derartige Ringräume entweder mit einem eingestopften Teerstrick oder anderen bituminierten Faserbündeln oder Schaumstoffen mit nachträglicher Aufbringung eines Dichtungskittes abgedichtet. Für hohe Anforderungen wurde dagegen eine mechanische Abdichtung durch eine Gliederkettendichtung eingebaut. Hierbei wurden mittels Spannschrauben gummiartige Dichtungssegmente gequetscht und dabei fest gegen die Außenwandung und die Innenwandung gedrückt, so daß der Ringraum zwischen Außenwandung und Innenwandung abgedichtet wurde. Die nach dem Stand der Technik durchgeführten Abdichtungsmaßnahmen waren entweder unzuverlässig oder außerordentlich teuer. Die Gliederkettendichtung mußte in ihrer Länge genauestens auf den Umfang der Rohrleitung respektive der Außenwandung abgestimmt sein, um eine zuverlässige Abdichtung zu gewährleisten. Dies führte zu einer sehr aufwendigen Lagerhaltung und damit verbundenen Kosten.

Aufgabe der vorliegenden Erfindung ist es daher, eine Vorrichtung der eingangs genannten Art zu schaffen, mit deren Hilfe schnell und kostengünstig und mit geringem Aufwand ein Ringraum zuverlässig abgedichtet werden kann.

Diese Aufgabe wird erfindungsgemäß dadurch gelöst, daß ein flexibler Schlauch an der Abdichtstelle einer Längsachse des Ringraumes im wesentlichen konzentrisch verläuft und sich im wesentlichen kraftschlüssig an der Innenwandung und der Außenwandung abstützt.

Damit ist es möglich, im Bereich einer definierten und zulässigen Elastizität des Schlauches Ringräume unterschiedlicher Weiten und Ausgestaltungen abzudichten, ohne daß jeweils ein besonderer Schlauch gewählt werden muß.

Gemäß einer bevorzugten Ausführungsform der Erfindung ist der Schlauch mit einem Druckmedium gefüllt, das einen Anpreßdruck in Richtung auf die Innen- und die Außenwandung ausbildet. Hierdurch kann eine hermetische Abdichtung der Abdichtstelle erreicht werden. Der Schlauch liegt homogen auf der Innen- und der Außenwandung auf. Etwaige Längenausdehnungsdifferenzen zwischen dem die Außenwandung ausbildenden Mantelrohr o. ä. und dem die Innenwandung ausbildenden Mediumrohr werden durch die im wesentlichen kraftschlüssige Anlage des Schlauches an der Innen- und der Außenwandung kompensiert.

Gemäß einer weiteren bevorzugten Ausführungsform der Erfindung kann der Schlauch aus einem Endlosschlauch bestehen. Dieser wird bei Verlegung einer Rohrleitung beispielsweise in einem Mantelrohr über das freie Rohrende übergestreift und dann an die Abdichtstelle verschoben und ausgerichtet. Dort wird er dann mit dem Druckmedium gefüllt und verschlossen, so daß eine sichere Abdichtung der Abdichtstelle gewährleistet ist.

Gemäß einer weiteren bevorzugten Ausführungsform der Erfindung besteht der Schlauch aus einem Schlauchstück, dessen einander abgewandte Enden offen sind. Dieser wird von einer Rolle abgewickelt und bauseits auf Maß zugeschnitten. Die Enden werden über ein Verbindungsstück miteinander verbunden, das als Klemmstück ausgebildet ist, durch das der Schlauch im Bereich seiner Enden hindurchragt. Dieses Klemmstück kann als Schlußdichtung verwendet werden, nachdem der Schlauch mit dem Druckmedium gefüllt und das Druckmedium den Schlauch zur festen Anlage an der Innen- und der Außenwandung gebracht hat. Mit Hilfe des Verbindungsstückes kann dann ein noch freier Zwischenraum zwischen den Schlauchenden zuverlässig verschlossen werden. Diese
Ausführungsform der Erfindung hat den Vorteil,
daß sie nachträglich angebracht und auch
nachträglich entfernt beziehungsweise ausgewechselt werden kann, ohne daß die Dichtung
zerstört werden müßte.

Weitere Einzelheiten der Erfindung ergeben
sich aus der nachfolgenden ausführlichen
Beschreibung und den beigefügten Zeichnungen,
in denen eine bevorzugte Ausführungsform
der Erfindung beispielsweise veranschaulicht
ist.

In den Zeichnungen zeigen:

Fig. 1: einen Querschnitt durch ein
in einer Lochleibung geführtes
Mediumrohr mit einer einen
Ringraum verschließenden
Vorrichtung,

Fig. 2: einen Schnitt entlang der
Linie II-II in Figur 1,

Fig. 3: beispielhafte Darstellungen
von Schlauchquerschnitten,

Fig. 4: eine Draufsicht auf ein Verbindungsstück in schematischer
Darstellung,

Fig. 5: ein Verbindungsstück gemäß

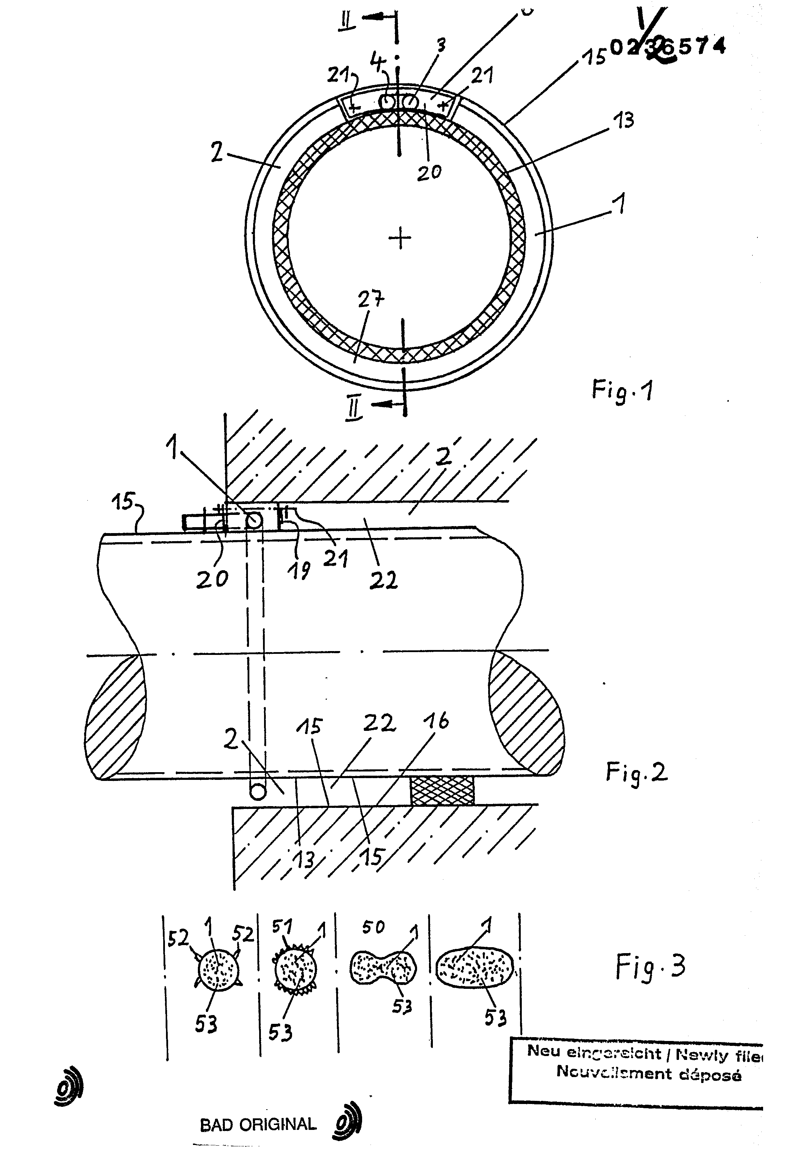

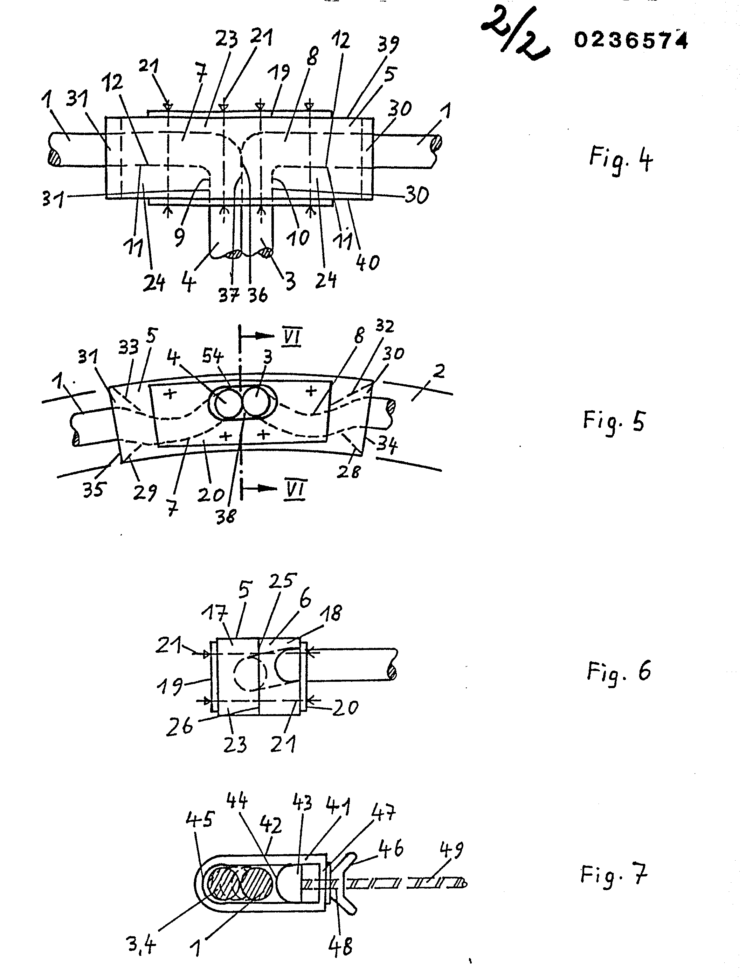

Figur 4 in Vorderansicht,

Fig. 6: ein Schnitt entlang der Linie
VI-VI in Figur 5 und

Fig. 7: einen Knebelverschluß zum
Verschluß eines Schlauchendes
in Seitenansicht.

Die Erfindung besteht im wesentlichen aus einem elastischen, dehnbaren flexiblen Schlauch 1, der im wesentlichen einen Ringraum 2 ausfüllt und dessen einander abgewandte Enden 3, 4 über ein Verbindungsstück 5 miteinander verbunden sind.

Das Verbindungsstück 5 ist als Klemmstück 6 ausgebildet, durch das der Schlauch 1 im Bereich seiner Enden 3, 4 hindurchragt. Das Klemmstück 6 ist von Führungskanälen 7, 8 durchzogen, durch die der Schlauch 1 mit seinen seinen Enden 3, 4 benachbarten Bereichen 9, 10 hindurchragt.

In ausgedehntem Zustand stützt sich der Schlauch mit seinen äußeren Oberflächen 11 abdichtend an inneren Oberflächen 12 der Führungskanäle 7, 8 ab.

Das Klemmstück 6 ist mit einer Innenfläche 14 versehen, die eine den Ringraum 2 in Richtung auf seine Längsachse begrenzenden Innenwandung 13 zugekehrt, der Innenwandung 13 anpaßbar ist und der Längsachse des Ringraumes 2 im wesentlichen konzentrisch verläuft. Das Klemmstück ist im wesentlichen halbelastisch und mit einer Außenfläche 16 versehen, die einer der Innenwandung 13 abgewandten Außenwandung 15 zugekehrt dieser anpaßbar ist und ebenfalls der Längsachse des Ringraumes 2 im wesentlichen konzentrisch verläuft. Das Klemmstück 6 füllt den Ringraum 2 den Enden 3, 4 des Schlauches 1 benachbart in radialen Richtungen im wesentlichen aus. Das Klemmstück 6 besteht im wesentlichen aus zwei Teilstücken 17, 18, die über zwei Preßbeschläge 19, 20 und Spannbolzen 21 gegeneinander verspannt sind. Ein einem Innenbereich 22 des Ringraumes 2 zugekehrtes Teilstück 17 des Klemmstückes 6 ist als Innenteil 23 und ein dem Innenbereich 22 abgewandtes Teilstück als Außenteil 24 ausgebildet. Der Innenteil 23 weist dem Außenteil 24 zugewandte Preßflächen 25 auf, denen Preßflächen 26 des Außenteiles angepaßt sind und die diese beaufschlagen.

Die Teilstücke 17, 18 bestehen aus halbelastischem Material.

Die Führungskanäle 7, 8 des Klemmstückes 6 verlaufen in ihren einem Mittelstück 27 des Schlauches 1 zugekehrten Bereichen 28, 29 im wesentlichen konzentrisch zur Längsachse des Ringraumes 2. Die Führungskanäle 7, 8 sind in Richtungen auf die Längsachse des Ringraumes 2 durchgebogen. Die Führungskanäle 7, 8 sind in ihren den Enden 3, 4 des Schlauches 1 abgewandten Endbereichen 30, 31 mit im wesentlichen konisch in Richtungen auf die Innen- und Außenwandung 13, 15 verlaufenden Aufweitungen 32, 33 versehen. Die Aufweitungen 32, 33 sind in ihren einander abgewandten weitesten Bereichen 34, 35 in ihren Abmessungen annähernd der lichten Weite des Ringraumes 2 angepaßt, damit der Schlauch in ausgedehntem Zustand sich auch benachbart der weitesten Bereiche abdichtend an der Innen- und der Außenwandung anlegen kann.

Die Führungskanäle 7, 8 verlaufen in ihren den Enden 3, 4 des Schlauches 1 zugekehrten Bereichen 36, 37 in Richtungen, die dem Innenbereich 22 des Ringraumes 2 abgewandt sind und der Längsachse des Ringraumes 2 im wesentlichen parallel laufen. Die den Enden 3, 4 zugekehrten Bereiche 36, 37 der Führungskanäle 7, 8 bilden eine gemeinsame Öffnung 38 aus, aus der die Enden 3, 4 des Schlauches 1 herausragen. Die Führungskanäle 7, 8 sind dabei in der Weise in den Teilstücken 17, 18 angeordnet, daß jeder Führungskanal 7, 8 mindestens teilweise jedes Teilstück 17, 18 durchläuft.

Die Preßbeschläge 19, 20 verlaufen den Preßflächen 25, 26 der Teilstücke 17, 18 und einander im wesentlichen planparallel. Die Preßplatten 19, 20 haben geringfügig geringere Abmessungen als ihnen zugekehrte Oberflächen 39, 40 der Teilstücke 17, 18. Sie können auch profiliert gestaltet sein. Die Spannbolzen 21 bestehen aus hochfesten Schloßschrauben, die drehfest an einer dem Innenbereich 22 zugekehrten Preßplatte 19 befestigt sind und die durch die Teilstücke 17, 18 und die äußere Preßplatte 20 hindurchragen.

Die Enden 3, 4 des Schlauches 1 sind entweder zusammen oder mit jeweils einem Knebelverschluß 41 verschlossen. Dieser besteht aus einem in einem Spannrahmen 42 geführten Schließknebel 43, der eine konvex geformte Preßfläche 44 aufweist, an den eine Gegendruckfläche 45 des Spannrahmens 42 angepaßt ist. Der Knebelverschluß 41 ist mit einer Spannschraube 46 versehen, die drehbeweglich an einer der Gegendruckfläche 45 abgewandten Lagerplatte 47 des Spannrahmens 42 befestigt ist und deren Innengewinde 48 mit einer den Schließknebel 43 tragenden Gewindestange 49 kämmt.

Der Schlauch 1 besteht aus Kunststoff. Es ist jedoch denkbar, daß der Schlauch 1 auch aus Gummi oder einem dichten oder porösen Gewebe besteht. Er ist elastisch und dehnbar. Er hat einen im wesentlichen runden Querschnitt. Er kann jedoch auch einen ovalen Querschnitt aufweisen. Ferner kann er mit Einschnürungen 50 versehen sein, die in seiner Längsrichtung verlaufen und durch die der Schlauch 1 einen hundeknochenförmigen Querschnitt erhält. Es ist ferner möglich, daß der Schlauch 1 mit in seiner Längsrichtung verlaufenden Dichtungsrippen 51 oder mit ebenfalls in Längsrichtung verlaufenden Dichtungslippen 52 versehen ist.

Das in den Schlauch 1 eingefüllte Druckmedium 53 kann - sofern der Schlauch 1 nicht aus einem Gewebe besteht - aus Gas bestehen. Dieses kann Druckluft sein. Ferner kann das Druckmedium 53 aus einer Flüssigkeit bestehen. Vorzugsweise besteht das Druckmedium jedoch aus einem Schaumstoff. Dieser kann aushärtbar sein. Besonders vorteilhaft ist es, wenn der Schaumstoff elastisch bis halbhart aushärtbar ausgebildet ist.

Eine erfindungsgemäße Vorrichtung wird wie folgt eingesetzt:

Im Anlieferstadium ist der Schlauch 1 leer und auf eine Rolle aufgerollt. Der Schlauch 1 wird um die Innenwandung herumgelegt, zu einem Schlauchstück abgelängt und justiert. In entspanntem Zustand wird der Schlauch 1 mit seinen den Enden 3, 4 benachbarten Bereichen 9, 10 durch Führungskanäle 7, 8 des Klemmstücks 6 hindurchgeführt und dann mit dem Druckmedium 53 gefüllt. Dieses soll im hier geschilderten Beispiel aus einem reaktionsfähigen Schaumstoff, beispielsweise PUR- oder PIR-Schaum bestehen. Wenn der Schlauch 1 dann zumindest teilweise mit dem Druckmedium 53 gefüllt ist, wird der Schlauch 1 im Bereich seiner beiden Enden 3, 4 mit Hilfe von einem oder zwei Knebelverschlüssen 41, 42 verschlossen. In der Aushärtungsphase des Schaumstoffes entsteht ein beträchtlicher Druck, der den Schlauch 1 fest an die Innen- und die Außenwandungen 13, 15 preßt. Die beiden Enden 3, 4 werden im Ringraum 2 mit Hilfe des Klemmstückes 6 fixiert und gehalten. Dieses wird mit Hilfe der Preßplatten 19, 20 und der Spannbolzen 21 im Bereich zwischen den Enden 3, 4 an der Innen- und der Außenwandung 13, 15 abdichtend festgepreßt und damit der Ringraum 2 endgültig verschlossen.

Der Anpreßdruck der Dichtung kann über die Wahl des Mischungsverhältnisses für das Druckmedium 53 im Schlauch 1 eingestellt werden. Mit Hilfe der erfindungsgemäßen Vorrichtung können Maßtoleranzen des Ringraumes 1 besser als nach dem Stand der Technik aufgefangen und die Dichtung gleichsam maßgeschneidert werden. Es ist möglich, mit Hilfe der Erfindung Ringräume abzudichten, die mittlere, große oder sehr große Medienrohre umgeben. Durch entsprechende Auswahl der Schlauchmaterialien können die verschiedensten Dichtungsanforderungen erfüllt werden, beispielsweise für kalte oder heiße Rohre.

Es ist auch ferner möglich nach der Erfindung, vorgefertigte O-Ringschläuche zu verwenden oder aber die Schlauchenden mit Hilfe einer im einzelnen nicht weiter dargestellten Manschette am Einsatzort zu einer O-ringförmigen Dichtung zu verbinden. Zu diesem Zweck ist es erforderlich, daß der Schlauch 1 eine Einfüllöffnung für das Druckmedium 53 aufweist. Die Einfüllöffnung muß verschließbar sein, um das Druckmedium 53 am Austreten aus dem Schlauch 1 zu hindern. Ein vorgefertigter ringförmiger Schlauch kann über ein freies Ende einer im Bau befindlichen Rohrleitung drübergeschoben werden. In diesem Falle weist der ringförmige Schlauch 1 einen Innendurchmesser auf, der ein geringes Maß geringer ausfällt als die ihm zugewandte Innenwandung.

Durch die besondere Ausgestaltung des Schlauchprofils kann auf verschiedene Dichtungsanforderungen Rücksicht genommen werden. Für erhöhte Abdichtungsanforderungen kann der Schlauch 1 mit Dichtungsrippen 51 oder Dichtungslippen 52 versehen sein, die gegenüber der ihnen zugekehrten Innenwandung 13 oder Außenwandung 15 jeweils Labyrinthdichtungen ausbilden.

Patentansprüche:

1. Vorrichtung zur Abdichtung eines Ringraumes an einer Abdichtstelle, die sich zwischen einer Innenwandung und einer Außenwandung erstreckt, dadurch gekennzeichnet, daß ein flexibler Schlauch (1) an der Abdichtstelle einer Längsachse des Ringraumes (2) im wesentlichen konzentrisch verläuft und sich im wesentlichen kraftschlüssig an der Innenwandung (13) und der Außenwandung (15) abstützt.

2. Vorrichtung nach Anspruch 1, dadurch gekennzeichnet, daß der Schlauch (1) mit einem Druckmedium (53) gefüllt ist, das einen Anpreßdruck des Schlauches (1) in Richtung auf die Innen- und die Außenwandung (13, 15) ausbildet.

3. Vorrichtung nach Anspruch 1 und 2, dadurch gekennzeichnet, daß der Schlauch (1) aus einem Endlosschlauch besteht.

4. Vorrichtung nach Anspruch 1 bis 3, dadurch gekennzeichnet, daß der Schlauch (1) im wesentlichen ringförmig ausgebildet ist und im entspannten Zustand einen Innenumfang aufweist, der ein geringes Maß geringer ist als der Umfang der Innenwandung (13).

5. Vorrichtung nach Anspruch 1 bis 4, dadurch gekennzeichnet, daß der Schlauch (1) mit mindestens einer das Druckmedium (53) aufnehmenden verschließbaren Einfüllöffnung versehen ist.

6. Vorrichtung nach Anspruch 1 und 2, dadurch gekennzeichnet, daß der Schlauch (1) als Schlauchstück ausgebildet ist, dessen einander abgewandte Enden (3, 4) offen sind.

7. Vorrichtung nach Anspruch 1 und 2, 6, dadurch gekennzeichnet, daß an einem Ende (3) ein dieses abdichtendes Verbindungsstück (5) vorgesehen ist, das dem anderen Ende (4) abdichtend angepaßt ist.

8. Vorrichtung nach Anspruch 1 und 2, 6, 7, dadurch gekennzeichnet, daß das Verbindungsstück (5) als eine den Schlauch zu einem O-Ring verbindende, ihm im Bereich der Enden (3, 4) nach außen abdichtende Abdichtmanschette ausgebildet ist.

9. Vorrichtung nach Anspruch 1 und 2, 6, dadurch gekennzeichnet, daß ein Verbindungsstück (5) vorgesehen ist, das als Klemmstück (6) ausgebildet ist, durch das der Schlauch (1) in seinen seinen Enden (3, 4) benachbarten Bereichen (9, 10) hindurchragt.

10. Vorrichtung nach Anspruch 1 und 2, 6, 9, dadurch gekennzeichnet, daß das Klemmstück (6) von Führungskanälen (7, 8) durchzogen ist, durch die der Schlauch (1) mit seinen seinen Enden (3, 4) benachbarten Bereichen (9, 10) hindurchragt.

11. Vorrichtung nach Anspruch 1 und 2, 6, 9 und 10, dadurch gekennzeichnet, daß der Schlauch (1) sich in seinem ausgedehnten Zustand mit seinen äußeren Oberflächen (11)

abdichtend an inneren Oberflächen (12) der Führungskanäle (7, 8) abstützt.

12. Vorrichtung nach Anspruch 1 und 2, 6, 9 bis 11, dadurch gekennzeichnet, daß das Klemmstück (6) mit seiner der Innenwandung (13) zugekehrten Innenfläche (14) der Innenwandung (13) angepaßt ist und der Längsachse des Ringraumes (2) im wesentlichen konzentrisch verläuft.

13. Vorrichtung nach Anspruch 1 und 2, 6, 9 bis 12, dadurch gekennzeichnet, daß das Klemmstück (6) mit seiner der Außenwandung (15) zugekehrten Außenfläche (16) der Außenwandung anpaßbar ist und der Längsachse des Ringraumes (2) im wesentlichen konzentrisch verläuft.

14. Vorrichtung nach Anspruch 1 und 2, 6, 9 bis 13, dadurch gekennzeichnet, daß das Klemmstück (6) den Ringraum (2) benachbart der Enden (3, 4) des Schlauches (1) in radialen Richtungen im entspannten Zustand im wesentlichen ausfüllt.

15. Vorrichtung nach Anspruch 1 und 2, 6, 9 bis 14, dadurch gekennzeichnet, daß das Klemmstück (6) im wesentlichen aus zwei Teilstücken (17, 18) besteht, die über zwei Preßbeschläge (19, 20) und Spannbolzen (21) gegeneinander verspannt sind.

16. Vorrichtung nach Anspruch 1 und 2, 6, 9 bis 15, dadurch gekennzeichnet, daß ein einem Innenbereich (22) des Ringraumes

- 14 -

(2) zugewandtes Teilstück (17) als Innenteil
(23) ausgebildet ist und ein dem Innenbereich
(22) abgewandtes Teilstück als Außenteil
(24) ausgebildet ist.

17. Vorrichtung nach Anspruch 1 und 2, 6, 9
bis 16, dadurch gekennzeichnet, daß der
Innenteil (23) dem Außenteil (24) zugewandte
Preßflächen (25) aufweist, denen Preßflächen
(26) des Außenteils (24) angepaßt sind und
die sie beaufschlagen.

18. Vorrichtung nach Anspruch 1 und 2, 6, 9
bis 17, dadurch gekennzeichnet, daß die
Teilstücke (17, 18) aus elastischem Material
bestehen.

19. Vorrichtung nach Anspruch 1 und 2, 6, 9
bis 18, dadurch gekennzeichnet, daß die
Führungskanäle (7, 8) des Klemmstückes
(6) in ihren einem Mittelstück (27) des
Schlauches (1) zugekehrten Bereichen (28, 29)
im wesentlichen konzentrisch zur Längsachse des Ringraumes (2) verlaufen.

20. Vorrichtung nach Anspruch 1 und 2, 6, 9
bis 19, dadurch gekennzeichnet, daß die
Führungskanäle (7, 8) in Richtung auf
die Längsachse des Ringraumes (2) durchgebogen sind.

21. Vorrichtung nach Anspruch 1 und 2, 6, 9
bis 20, dadurch gekennzeichnet, daß die Führungskanäle (7, 8) in ihren den Enden (3, 4) des Schlauches (1) abgewandten Endbereichen (30, 31) im wesentlichen konisch auf die Innen- und die Außenwandung (13, 15) verlaufende Aufweitungen (32, 33) aufweisen.

22. Vorrichtung nach Anspruch 1 und 2, 6, 9 bis 21, dadurch gekennzeichnet, daß die Aufweitungen (32, 33) in ihren einander abgewandten weitesten Bereichen (34, 35) in ihren Abmessungen im wesentlichen der lichten Weite des Ringraumes (2) entsprechen.

23. Vorrichtung nach Anspruch 1 und 2, 6, 9 bis 22, dadurch gekennzeichnet, daß die Führungskanäle (7, 8) in ihren den Enden (3, 4) des Schlauches (1) benachbarten Bereichen (9, 10) in Richtungen verlaufen, die dem Innenbereich (22) des Ringraumes (2) abgewandt sind.

24. Vorrichtung nach Anspruch 1 und 2, 6, 9 bis 23, dadurch gekennzeichnet, daß die den Enden (3, 4) zugekehrten Bereiche (36, 37) der Führungskanäle (7, 8) eine gemeinsame Öffnung (38) des Klemmstückes (6) ausbilden, aus denen die Enden (3, 4) des Schlauches (1) herausragen.

25. Vorrichtung nach Anspruch 1 und 2, 6, 9 bis 24, dadurch gekennzeichnet, daß die Führungskanäle (7, 8) jeweils mindestens teilweise von jedem Teilstück (17, 18) des Klemmstückes (6) eingeschlossen sind.

26. Vorrichtung nach Anspruch 1 und 2, 6, 9 bis 25, dadurch gekennzeichnet, daß die Preßbeschläge (19, 20) den Preßflächen (25, 26) und diesen im wesentlichen planparallel verlaufenden Oberflächen (39, 40) der Teilstücke (17, 18) im wesentlichen planparallel verlaufen.

27. Vorrichtung nach Anspruch 1 und 2, 6, 9 bis 26, dadurch gekennzeichnet, daß die Preßbeschläge (19, 20) geringere Abmessungen als die Oberflächen (39, 40) aufweisen.

28. Vorrichtung nach Anspruch 1 und 2, 6, 9 bis 27, dadurch gekennzeichnet, daß die dem Innenbereich (22) abgewandte äußere Preßplatte (20) eine der gemeinsamen Öffnung (38) zugekehrte Ausnehmung (54) aufweist, deren Abmessungen ein geringes Maß größer als die gemeinsame Öffnung ausgebildet ist.

29. Vorrichtung nach Anspruch 1 und 2, 6, 9 bis 28, dadurch gekennzeichnet, daß die Spannbolzen (21) aus Schloßschrauben bestehen, die drehfest in einer dem Innenbereich (22) zugekehrten Preßplatte (19) befestigt sind und die durch die Teilstücke (17, 18) und die äußere Preßplatte (20) hindurchragen.

30. Vorrichtung nach Anspruch 1 und 2, 6, 9 bis 29, dadurch gekennzeichnet, daß die Enden (3, 4) des Schlauches (1) mit jeweils einem Knebelverschluß (41) verschlossen sind.

31. Vorrichtung nach Anspruch 1 und 2, 6, 9 bis 30, dadurch gekennzeichnet, daß der Knebelverschluß (41) aus einem in einem Spannrahmen (42) geführten Schließknebel (43) besteht, der eine konvex geformte Preßfläche (44) aufweist, an den eine Gegendruckfläche (45) des Spannrahmens (42) angepaßt ist.

32. Vorrichtung nach Anspruch 1 und 2, 6, 9 bis 30, dadurch gekennzeichnet, daß der Knebelverschluß (41) eine Spannschraube (46) aufweist, die drehbeweglich an einer der Gegendruckfläche (45) abgewandten Lagerplatte (47) des Spannrahmens (42) befestigt ist und deren Innengewinde (48) mit einer den Schließknebel (43) tragenden Gewindestange (49) kämmt.

33. Vorrichtung nach Anspruch 1 bis 32, dadurch gekennzeichnet, daß der Schlauch (1) aus Kunststoff besteht.

34. Vorrichtung nach Anspruch 1 bis 32, dadurch gekennzeichnet, daß der Schlauch (1) aus Gummi besteht.

35. Vorrichtung nach Anspruch 1 bis 32, dadurch gekennzeichnet, daß der Schlauch (1) aus Gewebe besteht.

36. Vorrichtung nach Anspruch 1 bis 35, dadurch gekennzeichnet, daß der Schlauch (1) elastisch ist.

37. Vorrichtung nach Anspruch 1 bis 35, dadurch gekennzeichnet, daß der Schlauch (1)
dehnbar ist.

38. Vorrichtung nach Anspruch 1 bis 37, dadurch
gekennzeichnet, daß der Schlauch (1) einen
im wesentlichen runden Querschnitt aufweist.

39. Vorrichtung nach Anspruch 1 bis 37, dadurch
gekennzeichnet, daß der Schlauch (1) einen
im wesentlichen ovalen Querschnitt aufweist.

40. Vorrichtung nach Anspruch 1 bis 37, dadurch
gekennzeichnet, daß der Schlauch (1) mit
Einschnürungen (50) versehen ist, die in
seiner Längsrichtung verlaufen.

41. Vorrichtung nach Anspruch 1 bis 40, dadurch
gekennzeichnet, daß der Schlauch (1) mit
in seiner Längsrichtung verlaufenden Dichtungsrippen (51) versehen ist.

42. Vorrichtung nach Anspruch 1 bis 40, dadurch
gekennzeichnet, daß der Schlauch (1) mit
in seiner Längsrichtung verlaufenden Dichtungslippen (52) versehen ist.

43. Vorrichtung nach Anspruch 1 bis 42, dadurch
gekennzeichnet, daß das Druckmedium (53)
aus Gas besteht.

44. Vorrichtung nach Anspruch 1 bis 42, dadurch
gekennzeichnet, daß das Druckmedium (53)
aus Druckluft besteht.

45. Vorrichtung nach Anspruch 1 bis 42, dadurch
gekennzeichnet, daß das Druckmedium (53) aus einer Flüssigkeit besteht.

46. Vorrichtung nach Anspruch 1 bis 42, dadurch gekennzeichnet, daß das Druckmedium (53) aus einem Schaumstoff besteht.

47. Vorrichtung nach Anspruch 1 bis 42, 46, dadurch gekennzeichnet, daß das Druckmedium (53) aus einem aushärtbaren Schaumstoff besteht.

48. Vorrichtung nach Anspruch 1 bis 42, 46, 47, dadurch gekennzeichnet, daß das Druckmedium (53) aus einem elastisch bis halbhart aushärtbaren Schaumstoff besteht.

Fig.1

Fig.2

Fig.3

Fig. 4

Fig. 5

Fig. 6

Fig. 7